# FASCICULE DE BREVET EUROPEEN

(11) **EP 0 872 460 B1**
(45) Date de publication et mention de la délivrance du brevet: **05.09.2001**
(21) Numéro de dépôt: 98400902.7
(22) Date de dépôt: 10.04.1998
(51) Int. Cl.: C04B 41/91

(54) **Procédé de traitement de céramiques, notamment à base d'oxyde de zirconium**
Verfahren zur Bearbeitung von keramischen Materialien, insbesondere von Keramik auf der Basis von Zirkonoxid
Process for processing ceramic materials, in particular ceramics based on zirconia

(30) Priorité: 15.04.1997 FR 9704628
(43) Date de publication de la demande: 21.10.1998
(73) Titulaire: C.S.E.M. CENTRE SUISSE D'ELECTRONIQUE ET DE MICROTECHNIQUE SA, 2007 Neuchâtel (CH)
(72) Inventeur: Haenni, Werner, 75116 Paris (FR); Dan, Jean-Pierre, 75116 Paris (FR)
(74) Mandataire: Ballot, Paul

(56) Documents cités:
- EP-A- 0 373 848
- EP-A- 0 690 035
- DATABASE WPI Section Ch, Week 8531 Derwent Publications Ltd., London, GB; Class E32, AN 85-185889 XP002050771 & JP 60 112 620 A (NIPPON OIL SEAL IND CO LTD) , 19 juin 1985

## Description

L'invention concerne le traitement des céramiques, notamment celles à base d'oxyde de zirconium et, plus particulièrement, un procédé pour traiter ces céramiques en vue de faciliter leur usinage.

Par suite de leur résistance à l'usure et à la chaleur, les céramiques sont de plus en plus utilisées pour fabriquer des pièces mécaniques.

Cependant, par suite de leur dureté, mais aussi de leur fragilité, la fabrication de pièces en céramique par des procédés mécaniques est difficile et d'un coût élevé.

Aussi, un but de la présente invention est de mettre en oeuvre un procédé de traitement de pièces en céramique qui permette d'effectuer un usinage des pièces par des procédés autres que mécaniques, tels que des procédés mettant en oeuvre un courant électrique tels que l'électroérosion et l'usinage électrochimique.

Ce but est atteint en faisant subir à la pièce de céramique, qui est en matériau diélectrique, un traitement qui la transforme en matériau conducteur de l'électricité, ce qui permet de mettre en oeuvre les procédés classiques utilisables pour façonner une pièce conductrice de l'électricité tels que l'électroérosion ou l'usinage électrochimique.

L'invention concerne donc un procédé de traitement d'une pièce en céramique, notamment à base d'oxyde de zirconium, caractérisé en ce qu'il comprend les étapes suivantes consistant à :
(a) chauffer la pièce de céramique dans une atmosphère sans oxygène de manière à obtenir une pièce conductrice de l'électricité, et
(b) modifier la pièce résultant de l'opération (a) par enlèvement ou dépôt de matière par au moins un procédé mettant en oeuvre un courant électrique.

Le procédé peut être complété par une étape supplémentaire ultérieure consistant à :
(c) chauffer la pièce résultant de l'opération (b) dans une atmosphère avec oxygène de manière à obtenir une pièce ayant à nouveau les propriétés diélectriques de la pièce de céramique.

Le procédé peut être précédé d'une étape consistant à recouvrir une partie de la pièce de céramique par une couche de matériau de protection de manière que l'opération (a) n'ait d'effet que sur les parties non recouvertes par la couche de matériau de protection.

Cette couche de matériau de protection peut être enlevée en tout ou partie au cours d'une étape ultérieure du procédé.

Les étapes (a) et (c) sont réalisées à des températures comprises entre 700°C et 900°C et leur durée est de 30 minutes à six heures.

L'opération (b) met en oeuvre tout procédé électrique tel que l'électroérosion ou un usinage électrochimique.

L'atmosphère de l'opération (a) comprend de préférence de l'hydrogène atomique et des radicaux d'hydrocarbures.

Pour l'opération (c), l'atmosphère doit être oxydante et peut par exemple comprendre de l'oxygène, du dioxyde de carbone (CO₂), de l'eau ou tout composé chimique contenant de l'oxygène.

Le procédé selon l'invention sera mieux compris à l'aide de la description détaillée ci-après du traitement réalisé sur une pièce céramique à base d'oxyde de zirconium.

La pièce de céramique à traiter peut résulter d'un traitement initial aboutissant à une forme particulière telle qu'une tige, un anneau, un tube ou tout élément de forme quelconque.

Cette céramique étant un diélectrique parfait, sa résistivité est supérieure à 10 mégohms aux températures comprises entre - 50°C et + 250°C. Par suite de sa dureté, cette pièce ne peut être mise en forme que par meulage ou par moulage par injection, ce qui limite fortement les possibilités de façonnage de la pièce.

Selon l'invention, cette pièce de céramique est chauffée dans une atmosphère sans oxygène jusqu'à une température d'au moins 700°C et pendant une durée de 30 minutes au moins. Des essais ont été effectués avec une atmosphère contenant de l'hydrogène atomique et des radicaux d'hydrocarbures, des températures comprises entre 700°C et 900°C et des durées de trente minutes à six heures.

L'activation de la phase gazeuse peut se faire par filament thermique, par plasma haute fréquence ou par plasma micro-onde.

Après cette première étape, la pièce de céramique présente les caractéristiques suivantes :
- une coloration noire anthracite avec éclat métallique à la surface,
- une coloration noire dans la masse,
- une augmentation de la dureté sans accroissement de la fragilité,
- une conductivité électrique de type piézorésistif à coefficient de température négatif, aussi bien en surface que dans la masse, et
- aucun changement de morphologie.

Par suite de sa conductivité électrique, cette pièce peut être façonnée par tous les procédés d'usinage mettant en oeuvre un courant électrique tels que l'électroérosion ou l'usinage électrochimique. Ces procédés électriques sont d'un coût moins élevé que ceux habituellement mis en oeuvre pour usiner la céramique comme le meulage.

La pièce céramique ayant été ainsi façonnée par des procédés électriques dans cette deuxième étape, elle peut être utilisée telle qu'elle, c'est-à-dire, en tant que conducteur électrique. Le procédé selon l'invention s'arrête donc après cette étape de façonnage par des procédés électriques.

Selon l'invention, une troisième étape est prévue et consiste à chauffer la pièce façonnée dans une atmosphère oxydante, comme définie plus haut, à une température comprise entre 700°C et 900°C et pendant une durée de 30 minutes à 6 heures.

A la suite de cette troisième étape, on observe que le matériau constituant la pièce façonnée est revenu à l'état diélectrique et à une couleur claire et blanchâtre.

Pour réaliser certaines pièces, il n'est parfois pas souhaitable que toute la pièce devienne un conducteur électrique. Pour satisfaire ce souhait, l'invention propose de déposer une couche dite de protection sur les parties de la pièce où l'effet conducteur électrique n'est pas souhaité de sorte que la première étape de chauffage ne modifie pas les caractéristiques du matériau diélectrique au niveau de ces parties protégées.

Cette couche de protection ou masque peut être réalisée par un ou plusieurs dépôts de chrome, de nitrure de titane ou de toute autre matière empêchant la diffusion de l'hydrogène dans les zones protégées, par exemple à l'aide d'un dépôt chimique sans courant, par une méthode de dépôt physique ou chimique en phase vapeur méthode plus connue sous les acronymes anglo-saxons "PVD" ou "CVP", respectivement.

Pendant la deuxième étape, dite de façonnage par procédé électrique, ce façonnage ne peut avoir lieu que pour les parties non protégées par la couche de protection.

Après cette deuxième étape, la couche de protection peut être enlevée par tous moyens connus.

Après l'étape (a) du traitement décrit ci-dessus, il a été constaté une amélioration des propriétés tribologiques de la céramique, notamment lors du frottement contre l'acier et surtout sous air sec.

Les applications du procédé de l'invention sont nombreuses, par exemple pour réaliser :
- des guides-fils pour machines à filer,
- des électrodes non-métalliques et très dures,
- des micro-roues, micro-engrenages pour des micro-systèmes et des pièces d'horlogerie,
- des outils de précision,
- des implants (dentisterie),
- des pièces décoratives, ..., etc.

## Revendications

1. Procédé de traitement d'une pièce en céramique, notamment à base d'oxyde de zirconium, **caractérisé en ce qu**'il comprend les étapes suivantes consistant à :
(a) chauffer les pièces de céramique dans une atmosphère sans oxygène de manière à obtenir une pièce conductrice de l'électricité,
(b) modifier la pièce résultant de l'opération (a) par enlèvement ou dépôt de matière par au moins un procédé mettant en oeuvre un courant électrique, et
(c) chauffer la pièce résultant de l'opération (b) dans une atmosphère contenant de l'oxygène ou un de ses composés, de manière à obtenir une pièce ayant à nouveau les propriétés diélectriques de la pièce de céramique avant l'opération (a).

2. Procédé selon la revendication 1, **caractérisé en ce qu**'il comprend, ou outre, une étape préliminaire à l'opération (a) consistant à :
- recouvrir une partie de la pièce de la céramique par une couche de matériau de protection de manière que l'opération (a) n'ait pas d'effet sur les parties recouvertes par la couche de matériau de protection.

3. Procédé selon la revendication 2, **caractérisé en ce qu**'il comprend, en outre, une étape consistant à :
- enlever la couche de matériau de protection avant ou après l'opération (b).

4. Procédé selon l'une quelconque des revendications précédentes 1 à 3, **caractérisé en ce que** l'opération (a) est effectuée à une température au moins égale à 700°C.

5. Procédé selon la revendication 4, **caractérisé en ce que** l'opération (a) est effectuée à une température comprise entre 700°C et 900°C.

6. Procédé selon l'une quelconque des revendications précédentes 1 à 5, **caractérisé en ce que** ladite atmosphère sans oxygène de l'opération (a) contient de l'hydrogène atomique et des radicaux d'hydrocarbures.

7. Procédé selon l'une quelconque des revendications précédentes 1 à 6, **caractérisé en ce que** l'opération (c) est effectuée à une température au moins égale à 700°C avec une atmosphère oxydante.

8. Procédé selon la revendication 7, **caractérisé en ce que** l'opération (c) est effectuée à une température comprise entre 700°C et 900°C.

9. Procédé selon l'une quelconque des revendications précédentes 1 à 8, **caractérisé en ce que** l'opération (a) a une durée comprise entre 30 minutes et 6 heures.

10. Procédé selon l'une quelconque des revendications précédentes 1 à 9, **caractérisé en ce que** l'opération (c) a une durée comprise entre 30 minutes et 6 heures.

11. Procédé selon l'une quelconque des revendications précédentes 1 à 10, **caractérisé en ce que** le procédé électrique de l'opération (b) est une électroérosion.

12. Procédé selon l'une quelconque des revendications précédentes 1 à 11, **caractérisé en ce que** le procédé électrique de l'opération (b) est un usinage électrochimique.

## Patentansprüche

1. Verfahren zur Behandlung eines Keramikstücks, insbesondere auf Basis von Zirkonoxid, **dadurch gekennzeichnet**, daß es die folgenden Schritte umfaßt:
(a) Heizen des Keramikstücks in einer sauerstoffreien Atmosphäre, so daß ein elektrisch leitendes Stück erhalten wird,
(b) Modifizieren des sich aus Arbeitsschritt (a) ergebenden Stücks durch Wegnehmen oder Hinzugeben von Material durch ein Verfahren, bei dem elektrischer Strom verwendet wird, und
(c) Heizen des sich aus Arbeitsschritt (b) ergebenden Stücks in einer Atmosphäre, die Sauerstoff oder eine Sauerstoff-Verbindung enthält, so daß ein Stück erhalten wird, das die dielektrischen Eigenschaften des Keramikstücks vor dem Arbeitsschritt (a) von neuem besitzt.

2. Verfahren nach Anspruch 1, **dadurch gekennzeichnet**, daß es einen dem Arbeitsschritt (a) vorgehenden Verfahrensschritt umfaßt, der umfaßt:
Bedecken eines Teils des Keramikstücks mit einer Schutzmaterialschicht, so daß der Arbeitsschritt (a) nicht auf die von der Schutzmaterialschicht bedeckten Teile einwirkt.

3. Verfahren nach Anspruch 2, **dadurch gekennzeichnet**, daß es außerdem einen Verfahrensschritt umfaßt, der umfaßt:
Beseitigen der Schutzmaterialschicht vor oder nach dem Arbeitsschritt (b).

4. Verfahren nach einem der vorangegangenen Ansprüche 1 bis 3, **dadurch gekennzeichnet**, daß der Verfahrensschritt (a) bei einer Temperatur durchgeführt wird, die mindestens gleich 700°C ist.

5. Verfahren nach Anspruch 4, **dadurch gekennzeichnet**, daß der Verfahrensschritt (a) bei einer Temperatur durchgeführt wird, die zwischen 700°C und 900°C liegt.

6. Verfahren nach einem der vorangegangenen Ansprüche 1 bis 5, **dadurch gekennzeichnet**, daß die sauerstoffreie Atmosphäre bei Arbeitsschritt (a) atomaren Wasserstoff und Kohlenwasserstoffradikale enthält.

7. Verfahren nach einem der vorangegangenen Ansprüche 1 bis 6, **dadurch gekennzeichnet**, daß der Verfahrensschritt (c) in einer oxidierenden Atmosphäre bei einer Temperatur durchgeführt wird, die mindestens gleich 700°C ist.

8. Verfahren nach Anspruch 7, **dadurch gekennzeichnet**, daß der Verfahrensschritt (c) bei einer Temperatur durchgeführt wird, die zwischen 700°C und 900°C liegt.

9. Verfahren nach einem der vorangegangenen Ansprüche 1 bis 8, **dadurch gekennzeichnet**, daß der Verfahrensschritt (a) zwischen 30 Minuten und 6 Stunden dauert.

10. Verfahren nach einem der vorangegangenen Ansprüche 1 bis 9, **dadurch gekennzeichnet**, daß der Verfahrensschritt (c) zwischen 30 Minuten und 6 Stunden dauert.

11. Verfahren nach einem der vorangegangenen Ansprüche 1 bis 10, **dadurch gekennzeichnet**, daß der elektrische Verfahrensarbeitsschritt (b) mit Elektroerosion durchgeführt wird.

12. Verfahren nach einem der vorangegangenen Ansprüche 1 bis 11, **dadurch gekennzeichnet**, daß der elektrische Verfahrensarbeitsschritt (b) durch eine elektrochemische Bearbeitung durchgeführt wird.

## Claims

1. Method for processing a ceramic part, in particular based on zirconium oxide, **characterised in that** it comprises the following steps consisting in:
(a) heating the ceramic parts in an atmosphere free of oxygen so as to obtain an electrically conducting part,
(b) modifying the part resulting from operation (a) by removing or depositing material by at least one process implementing an electrical current, and
(c) heating the part resulting from operation (b) in an atmosphere containing oxygen or one of its compounds so as to obtain a part again having the dielectric properties of the ceramic part before operation (a).

2. Method according to claim 1, **characterised in that** it additionally comprises a preliminary step prior to operation (a) consisting in:
- covering a portion of the ceramic part with a layer of protective material so that operation (a) has no effect on the portions covered by the layer of protective material.

3. Method according to claim 2, **characterised in that** it additionally comprises a step consisting in:
- removing the layer of protective material before or after operation (b).

4. Method according to any one of the preceding claims 1 to 3, **characterised in that** operation (a) is carried out at a temperature at least equal to 700°C.

5. Method according to claim 4, **characterised in that** operation (a) is carried out at a temperature lying between 700°C and 900°C.

6. Method according to any one of the preceding claims 1 to 5, **characterised in that** said atmosphere free of oxygen in operation (a) contains atomic hydrogen and radicals of hydrocarbons.

7. Method according to any one of the preceding claims 1 to 6, **characterised in that** operation (c) is carried out at a temperature at least equal to 700°C with an oxidising atmosphere.

8. Method according to claim 7, **characterised in that** operation (c) is carried out at a temperature lying between 700°C and 900°C.

9. Method according to any one of the preceding claims 1 to 8, **characterised in that** operation (a) has a duration of between 30 minutes and 6 hours.

10. Method according to any one of the preceding claims 1 to 9, **characterised in that** operation (c) has a duration of between 30 minutes and 6 hours.

11. Method according to any one of the preceding claims 1 to 10, **characterised in that** the electrical process of operation (b) is electro-erosion.

12. Method according to any one of the preceding claims 1 to 11, **characterised in that** the electrical process of operation (b) is electro-chemical shaping.
